# EUROPÄISCHE PATENTSCHRIFT

(11) **EP 2 240 287 B1**
(45) Veröffentlichungstag und Bekanntmachung des Hinweises auf die Patenterteilung: **12.03.2014**
(21) Anmeldenummer: 09701110.0
(22) Anmeldetag: 05.01.2009
(51) Int. Cl.: C01F 7/42, C22B 7/00, C22B 21/00, B09B 3/00, C01B 3/06, C01F 7/06

(54) **VERFAHREN ZUR VERWERTUNG VON ALUMINIUM IN ABFALLSTOFFEN, INSBESONDERE IM VERBUND MIT ANDEREN STOFFEN**
PROCESS FOR UTILIZING ALUMINIUM IN WASTE MATERIALS, IN PARTICULAR IN COMBINATION WITH OTHER SUBSTANCES
PROCÉDÉ D'UTILISATION D'ALUMINIUM PROVENANT DE DÉCHETS, NOTAMMENT EN COMBINAISON AVEC D'AUTRES MATÉRIAUX

(30) Priorität: 04.01.2008 DE 102008003221
(43) Veröffentlichungstag der Anmeldung: 20.10.2010
(73) Patentinhaber: Weingart und Kubrat GmbH, 21035 Hamburg (DE); Nowacki, Dörte, 21509 Glinde (DE)
(72) Erfinder: NOWACKI, Dörte, 21509 Glinde (DE); WEINGART, Andreas, CH-4161 Hochwald (CH)
(74) Vertreter: Wagner, Kilian
(86) Internationale Anmeldenummer: PCT/EP2009/000014
(87) Internationale Veröffentlichungsnummer: WO 2009/087079

(56) Entgegenhaltungen:
- EP-A- 0 591 895
- EP-A- 1 829 820
- DE-A1- 4 306 348
- DE-A1- 10 102 554
- DE-C1- 4 233 600
- US-A- 4 252 776
- US-B1- 6 296 817

## Beschreibung

Die Erfindung bezieht sich auf ein Verfahren zur Verwertung von Aluminium in Abfallstoffen, insbesondere im Verbund mit anderen Stoffen, nach dem Patentanspruch 1.

In Abfallstoffen befindet sich häufig eine mehr oder weniger große Menge an Aluminium. Abfallaluminium lässt sich einer unmittelbaren Verwertung zuführen, wenn es in einer Mindestkorngröße von übrigen Abfallstoffen separiert werden kann. Diese Voraussetzung ist jedoch vielfach nicht gegeben. Aluminiumfolien haften z. B. an Kunststoff- oder Zellstofffolien; Aluminiumfolien im Verpackungsmaterial sind häufig bedruckt. Aluminium befindet sich ferner im Verbund mit anderen Metallen, beispielsweise mit Stahl- oder Titannieten, etwa im Flugzeugbau. Bei derartigen Verbundstoffen ist es unwirtschaftlich, das Aluminium von diesen zu trennen.

Aluminium befindet sich auch in Schlacke von Müllverbrennungsanlagen. Häufig ist das Aluminium mehr oder weniger von der Schlacke ein- oder umschlossen. Die Temperatur in einer Verbrennungsanlage reicht üblicherweise nicht aus, um Metalle zum Schmelzen zu bringen. Die Metalle verändern daher normalerweise nicht ihre Ursprungsform. Es ist bekannt, Metallteile und Schlacke durch Magnete und Wirbelstromdetektoren zu trennen.

Die EP 1 167 556 A2 beschreibt ein Verfahren zur Auftrennung von Sondermüll in zwei Müllfraktionen, in dem zerkleinerter Sondermüll Alkalihydroxid und Wasser zugegeben wird. Hierdurch wird Aluminium des Mülls als Aluminiumhydroxid gelöst, wobei bei dieser chemischen Reaktion Wasserstoff entsteht, der zum Erzeugen von Prozesswärme genutzt werden kann.

Die DE 10 102 554 A 1 beschreibt ein Verfahren zur Verarbeitung von aluminiumbeschichteten Verbundstoffen, wobei diese ohne vorherige Aufkonzentrierung mit Lauge versetzt werden.

Aus der DE 4 306 348 A1 ist alternatives Verfahren zur Behandlung von Kunststoffrestmaterial bekannt, wobei auch hier keine Aufkonzentrierung stattfindet.

Ein ebenfalls aufkonzentrierungsfreies Verfahren ist in der EP 0 591 895 A2 beschrieben.

Die US 6,296,817B1 Stellt den nächstliegenden Stand der Technik dar und beschreibt ein Verfahren zur Verwertung von Aluminiumschlacke, wobei diese zerkleinert und klassiert wird. Das Materialgemisch wird zur Reinherstellung von Aluminium und zur Wasserstoffgewinnung verwendet.

Aus der US 4,252,776 ist es bekannt, bei der Aluminiumgewinnung aus Schlacke eine aktive Kühlung einzusetzen.

Weiterhin zum Stand der Technik werden genannt die EP 1 829 820 A sowie dieE 4 233 600 C1.

Der Erfindung liegt die Aufgabe zugrunde, ein Verfahren zur Verwertung von Aluminium in Abfallstoffen, insbesondere im Verbund mit anderen Stoffen anzugeben.

Diese Aufgabe wird durch die Merkmale des Patentanspruchs 1 gelöst.

Bei dem erfindungsgemäßen Verfahren werden die Abfallstoffe zerkleinert und Metalle und Metallverbundmaterial weitgehend von anhaftendem Material befreit. Eisenmetalle können vor der Zerkleinerung oder auch nachher durch geeignete Magnetabscheider entfernt werden. Das Materialgemisch wird anschließend nach Nichteisenmetallteilen und übrigem Material getrennt. Hierzu wird aus dem Abfall des Nichteisenmetall durch den Einsatz eines Nichteisenmetalltrenners, beispielsweise eines Wirbelströmers, getrennt. Das auf diese Weise abgetrennte Nichteisenmetall enthaltende Material wird in einem Reaktor zur Reaktion mit Natronlauge gebracht, wobei der austretende Wasserstoff unmittelbar zur Stromerzeugung eingesetzt wird. Bevorzugt wird als Abfallstoff ein aus Schlacke (z.B. einer Müllverbrennungsanlage) gewonnenes Metallkonzentrat mit Schlackeanhaftungen eingesetzt, in dem der Aluminiumanteil über 60%, weiter bevorzugt über 70%, noch weiter bevorzugt über 80% (Gewichtsprozent) beträgt. Bei der Verwendung eines derartigen Ausgangsmaterials ist es notwendig den Reaktionsprozess aktiv zu kühlen, um den Prozess kontrolliert führen zu können.

Nach einer Ausgestaltung der Erfindung kann die Natronlauge anschließend filtriert und das Aluminiumhydroxid zur Verwertung gebracht werden. Der bei der Hydroxierung frei werdende Wasserstoff wird entweder unmittelbar zur Stromerzeugung eingesetzt, indem er einem Stromerzeuger, etwa einer Brennstoffzelle, zugeführt wird oder indem er eine Turbine antreibt. Zusätzlich kann der Wasserstoff auch in gasförmiger oder flüssiger Form gespeichert werden, um anschließend zum Einsatz gebracht zu werden. Das hydroxierte Aluminium kann auf bekannte Weise zu Aluminium verarbeitet werden. "Unmittelbare Stromerzeugung" bedeutet dabei, dass der Stromerzeuger und der Wasserstofferzeuger in einer gemeinsamen Anlage angeordnet sind, also unmittelbar räumlich benachbart sind. Bevorzugt wird der im Wasserstofferzeuger entstehende Wasserstoff direkt in elektrischen Strom umgewandelt, kann jedoch bei Bedarf auch in einem , insbesondere druckregelbaren, Gaszwischenspeicher zwischengespeichert werden, der über Rohrleitungen an den Stromerzeuger sowie den Wasserstofferzeuger angeschlossen ist.

Die Erzeugung von Aluminium ist bekanntlich mit einem hohen Energieeinsatz verbunden. Mit Hilfe des erfindungsgemäßen Verfahrens kann beim Recyceln des Aluminiums ein großer Teil der für die ursprüngliche Erzeugung aufgewendeten Energie rückgewonnen werden.

Die Erzeugung von Aluminiumhydroxid durch Zugabe von Natronlauge zu Aluminium bzw. Aluminiumoxid ist ein an sich bekannter chemischer Prozess. Er wird bei der Erfindung dazu verwendet, Aluminium rückzugewinnen bei gleichzeitiger Energieerzeugung. Mit Hilfe des erfindungsgemäßen Verfahrens kann Aluminiumabfall rückgewonnen werden, der sonst unwiederbringlich verloren wäre. Dies gilt z.B. für Aluminium im Verbund mit anderen Materialien wie aluminiumhaltigen Verpackungsverbundstoffen.

Es ist nicht erforderlich, das Aluminium vorher von übrigen Nichteisenmetallen zu separieren, bevor die Nichteisenmetallteile in den Reaktor gegeben werden, weil nur Aluminium mit Natronlauge reagiert während die übrigen Teile, beispielsweise andere Nichteisenmetalle, sich im Sumpf des Reaktors absetzen und von dort ausgetragen werden können.

Nach einer Ausgestaltung der Erfindung können Verunreinigungen in den Nichteisenmetallteilen vor der Einbringung in den Reaktor ausgespült oder ausgewaschen werden. Die Natronlauge im Reaktor kann nach dem Ausfällen des Aluminiumhydroxids in den Reaktor rückgeführt werden.

Bei der im Reaktor stattfindenden Reaktion wird Wärme frei, die mit Hilfe eines Wärmeaustauschers zur Stromerzeugung genutzt werden kann.

Ein Ausführungsbeispiel zur Durchführung des erfindungsgemäßen Verfahrens wird anhand einer Zeichnung näher erläutert.

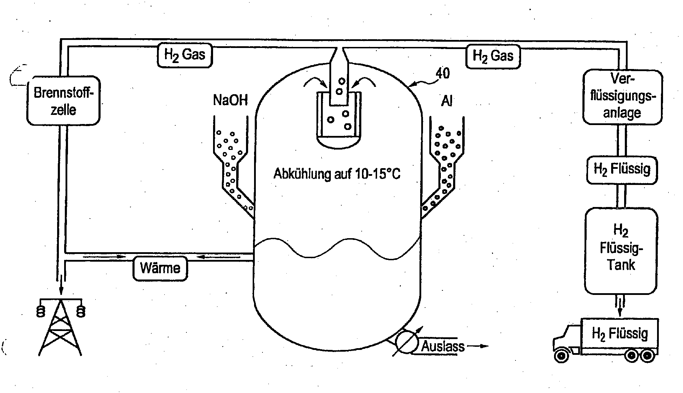

Die einzige Figur zeigt schematisch die Gewinnung von Energie aus Abfallaluminium nach dem erfindungsgemäßen Verfahren

Zerkleinertes Nichteisenmetall enthaltendes Material, beispielsweise in Form von Granulat, wird in einen Reaktor 40 eingetragen, in dem sich Natronlauge befindet. In einer exothermen Reaktion entsteht Wasserstoffgas, das über eine Brennstoffzelle zur elektrischen Energieerzeugung eingesetzt oder einer Verflüssigungsanlage zugeführt werden kann, mit Wasserstoff betriebenen Antriebsmotoren. Wasserstoffgas kann alternativ gasförmig oder flüssig gespeichert werden.

Bei dem bekannten Prozess geht Aluminium in Lösung, während noch vorhandenes Nichteisenmetallgranulat oder sonstige Verbundstoffe sich am Sumpf des Reaktors 40 absetzen. Die Natronlösung wird anschließend filtriert und herabgekühlt und mit Aluminiumhydroxidkristallen geimpft, so dass Aluminiumhydroxid ausfällt. Das ausgefallene Aluminiumhydroxid kann als Sekundärwertstoff in Aluminium überführt werden. Zurückgewonnene Natronlauge kann dem Prozess erneut zu geführt werden.

Sowohl bei der Stromerzeugung über die Brennstoffzelle als auch bei der beschriebenen exothermen Reaktion entstandene Wärme kann ebenfalls genutzt werden.

## Patentansprüche

1. Verfahren zur Verwertung von Aluminium in Abfallstoffen, wobei ein aus Schlacke gewonnenes Metallkonzentrat mit Schlackeanhaftungen einem Aluminiumanteil von über 60 Gewichtsprozent eingesetzt wird, mit den folgenden Schritten:
- die Abfallstoffe werden zerkleinert und Metalle und/oder Metallverbundmaterial wird von anhaftendem Material weitgehend befreit,
- das Materialgemisch wird anschließend nach Nichteisenmetallteilen und übrigem Material getrennt,
- das Nichteisenmetall enthaltende Material wird in einem Reaktor zur Reaktion mit Natronlauge gebracht und der Reaktionsprozess aktiv gekühlt wird, wobei der austretende Wasserstoff unmittelbar zur Stromerzeugung eingesetzt wird.

2. Verfahren nach Anspruch 1, **dadurch gekennzeichnet, dass** die das Aluminium komplex bindende Natronlösung filtriert und Aluminiumhydroxid zur Ausfällung gebracht wird.

3. Verfahren nach Anspruch 1 oder 2, **dadurch gekennzeichnet, dass** restliches Nichteisenmetall und dazugehörige Verbundstoffe aus dem Reaktor ausgetragen werden.

4. Verfahren nach einem der Ansprüche 1 bis 3, **dadurch gekennzeichnet, dass** Verunreinigungen der Nichteisenmetalle vor der Einbringung in den Reaktor ausgespült oder ausgewaschen werden.

5. Verfahren nach einem der Ansprüche 1 bis 4, **dadurch gekennzeichnet, dass** die Natronlauge nach dem Ausfällen von Aluminumhydroxid in den Reaktor zurückgeführt wird.

6. Verfahren nach einem der Ansprüche 1 bis 5, **dadurch gekennzeichnet, dass** mittels eines Wärmeaustauschers die im Reaktor entstehende Reaktionswärme zur Stromerzeugung genutzt wird.

7. Verfahren nach einem der Ansprüche 1 bis 6, **dadurch gekennzeichnet, dass** der Wasserstoff einer Brennstoffzelle oder einer Turbine zugeführt wird.

8. Verfahren nach einem der Ansprüche 1 bis 6, **dadurch gekennzeichnet, dass** der Wasserstoff verflüssigt wird.

9. Verfahren nach einem der Ansprüche 1 bis 6, **dadurch gekennzeichnet, dass** der Wasserstoff gasförmig gelagert wird.

## Claims

1. A method for utilising aluminium in waste materials, wherein a metal concentrate obtained from slag having slag adhesions and an aluminium fraction of more than 60 % by weight is used, said method comprising the following steps:
- the waste materials are size-reduced and metals and/or metal composite material is largely freed from adhering material,
- the material mixture is then separated according to nonferrous metal parts and other material,
- the material containing nonferrous metal is reacted with caustic-soda solution in a reactor and the reaction process is actively cooled, wherein the hydrogen produced is used directly for power generation.

2. The method according to Claim 1, **characterised in that** the caustic-soda solution binding the aluminium in a complex manner is filtered and aluminium hydroxide is precipitated.

3. The method according to Claim 1 or 2, **characterised in that** residual nonferrous metal and associated composite materials are discharged from the reactor.

4. The method according to one of Claims 1 to 3, **characterised in that** impurities of the nonferrous metals are rinsed out or washed out before introduction into the reactor.

5. The method according to one of Claims 1 to 4, **characterised in that** the caustic-soda solution is fed back into the reactor after the precipitation of aluminium hydroxide.

6. The method according to one of Claims 1 to 5, **characterised in that** the reaction heat produced in the reactor is used for power generation by means of a heat exchanger.

7. The method according to one of Claims 1 to 6, **characterised in that** the hydrogen is fed to a fuel cell or a turbine.

8. The method according to one of Claims 1 to 6, **characterised in that** the hydrogen is liquefied.

9. The method according to one of Claims 1 to 6, **characterised in that** the hydrogen is stored in gaseous form.

## Revendications

1. Procédé de valorisation d'aluminium dans des substances de rebut, le procédé utilisant un concentré métallique obtenu à partir de scories et présentant des adhérences aux scories à une teneur en aluminium supérieure à 60 % en poids et le procédé présentant les étapes suivantes:
- les substances de rebut sont déchiquetées et les métaux et/ou le matériau composé de métaux sont largement débarrassés du matériau adhérent,
- le mélange de matériaux est ensuite séparé en fraction non ferreuse et en le reste du matériau,
- le matériau contenant des métaux non ferreux est mis en réaction avec de la soude caustique dans un réacteur et la réaction est refroidie activement, l'hydrogène libéré étant utilisé directement pour la production de courant.

2. Procédé selon la revendication 1, **caractérisé en ce que** la solution de soude complexée avec l'aluminium est filtrée et l'hydroxyde d'aluminium est amené à précipiter.

3. Procédé selon les revendications 1 ou 2, **caractérisé en ce que** le reste de métaux non ferreux et les substances qui y sont liées sont extraits du réacteur.

4. Procédé selon l'une des revendications 1 à 3, **caractérisé en ce que** les impuretés des métaux non ferreux sont rincées ou lavées avant d'être apportées dans le réacteur.

5. Procédé selon l'une des revendications 1 à 4, **caractérisé en ce que** la solution de soude est renvoyée dans le réacteur après la précipitation de l'hydroxyde d'aluminium.

6. Procédé selon l'une des revendications 1 à 5, **caractérisé en ce que** la chaleur de réaction dégagée dans le réacteur est utilisée pour la production de courant au moyen d'un échangeur de chaleur.

7. Procédé selon l'une des revendications 1 à 6, **caractérisé en ce que** l'hydrogène est apporté à une cellule à combustible ou à une turbine.

8. Procédé selon l'une des revendications 1 à 6, **caractérisé en ce que** l'hydrogène est liquéfié.

9. Procédé selon l'une des revendications 1 à 6, **caractérisé en ce que** l'hydrogène est entreposé sous forme gazeuse.
